# EUROPÄISCHE PATENTSCHRIFT

(11) **EP 4 676 210 B1**
(45) Veröffentlichungstag und Bekanntmachung des Hinweises auf die Patenterteilung: **04.11.2026**
(21) Anmeldenummer: 24701380.8
(22) Anmeldetag: 19.01.2024
(51) Int. Cl.: A01B 23/02, A01B 15/02, A01B 15/04

(54) **WERKZEUG FÜR DIE BODENBEARBEITUNG**
SOIL-WORKING TOOL
OUTIL DE TRAVAIL DU SOL

(30) Priorität: 03.03.2023 DE 102023105352
(43) Veröffentlichungstag der Anmeldung: 14.01.2026
(73) Patentinhaber: Betek GmbH & Co. KG, 78733 Aichhalden (DE)
(72) Erfinder: CHMELIK, David, 78713 Schramberg (DE); GERTNER, Eduard, 78713 Schramberg (DE); HILGERT, Tobias, 78713 Schramberg (DE); MÜLLER, Andreas, 78733 Aichhalden (DE); NITSCH, Uwe, 01156 Dresden (DE); WOLF, Gotthard, 40822 Mettmann (DE)
(74) Vertreter: Herrmann, Jochen
(86) Internationale Anmeldenummer: PCT/EP2024/051220
(87) Internationale Veröffentlichungsnummer: WO 2024/183975

(56) Entgegenhaltungen:
- EP-B1- 3 289 845
- DE-A1- 102004 034 093
- DE-C2- 3 628 910
- DE-U1- 202019 005 418
- US-A- 2 743 495

## Beschreibung

Die Erfindung betrifft ein Werkzeug, insbesondere für die Bodenbearbeitung, insbesondere ein landwirtschaftliches Bodenbearbeitungswerkzeug oder bauwirtschaftliches Bodenbearbeitungswerkzeug, mit einem Guss-Grundkörper der aus einem Stahl- oder Gusseisen-Werkstoff besteht und der einen Tragabschnitt aufweist, wobei an dem Tragabschnitt ein oder mehrere Verschleiß-Schutzelemente, bestehend aus Hartmetall, insbesondere bestehend aus Wolframcarbid, mittels eines Befestigungsabschnitts abgestützt und gusstechnisch mit dem Tragabschnitt verbunden sind, wobei das wenigstens eine Verschleiß-Schutzelement an gegenüberliegenden Seiten mittels Seiteneinfassungen des Guss-Grundkörpers zumindest bereichsweise eingefasst ist.

Unter einer gusstechnischen Verbindung kann im Rahmen der Erfindung eine Verbindung verstanden werden, bei der die Materialien des Gusswerkstoffs und des Hartmetalls des wenigstens einen Verschleiß-Schutzelements miteinander verschmolzen, also stoffschlüssig verbunden sind.

Das oder die Verschleiß-Schutzelemente gemäß der Erfindung können bevorzugt als gesinterte Wolframcarbid-Formteile ausgebildet sein. Sie können insbesondere eine Schneide und/oder eine ebene oder gewölbte Formfläche aufweisen, zur Bildung einer Ableitfläche, über die bearbeitetes Verschleißmaterial, insbesondere Bodenmaterial, abgeleitet werden kann.

US 2,743,495 offenbart eine Bohrkrone mit einem Guss-Grundkörper, der an seinem längsseitigen Ende Hartmetall-Einsätze trägt. Diese sind in den Gusswerkstoff eingebettet. Sie stehen über den Guss-Grundkörper mittels Schneidspitzen vor. Für die Fertigung der Bohrkrone wird eine Gussform verwendet, Zur Fixierung der Hartmetall-Einsätze in der Gussform werden Nickelbleche verwendet. Diese schmelzen während des Gießprozesses auf, und bilden eine nickelreiche Schicht im Gussmaterial um die Hartmetall-Einsätze herum. Wenn die Bleche aufschmelzen, ergibt sich ein unkontrollierter Zustand, wobei die Hartmetall-Einsätze sich verschieben können. Weiterhin führt die nickelreiche Schicht zu einer Inhomogenität im Werkstoff, die zu Festigkeitseinbußen führen kann. Zudem verursachen die Nickelbleche einen erheblichen Mehraufwand.

Es ist Aufgabe der Erfindung, ein Werkzeug der eingangs erwähnten Art bereitzustellen, das mit geringem Aufwand einfach gusstechnisch herstellbar ist.

Es ist auch Aufgabe der Erfindung ein Verfahren zur Herstellung eines solchen Werkzeuges bereitzustellen.

Die das Werkzeug betreffende Aufgabe wird dadurch gelöst, dass wenigstens eine der Seiteneinfassungen, vorzugsweise beide Seiteneinfassungen, mittels einer Ausnehmung unterbrochen ist/sind und dass die Ausnehmung bis zu einer Körperbegrenzung des Verschleiß-Schutzelements geführt ist.

Der Bereich der Gussform zur Fertigung des erfindungsgemäßen Werkzeugs, welcher im fertigen Werkzeug die Ausnehmung bildet, reicht mit einem Formelement bis an das Verschleiß-Schutzelement, welches in die Gussform eingelegt ist, heran und fixiert es. Somit ist das Verschleiß-Schutzelement während des Gießvorgangs sicher an dem Formelement gehalten. Anschließend an das Formelement füllt das Gussmaterial die Gussform. Dabei bildet sich neben dem Formelement die Seiteneinfassung. Die Seiteneinfassung stabilisiert mit Beginn der Erstarrung der Schmelze das Verschleiß-Schutzelement. Auf diese Weise gelingt eine passgenaue Fertigung des Werkzeugs. Dabei entsteht nahezu kein Zusatzaufwand für die Ausbildung des Formelements. Es hat sich darüber hinaus auch gezeigt, dass der Übergangsbereich zwischen dem Verschleiß-Schutzelement und dem Gusskörper zu einer gusstechnisch hergestellten stoffschlüssigen Verbindung führt, die ausreichend stabil und belastbar ist.

Gemäß einer bevorzugten Erfindungsvariante kann es vorgesehen sein, dass die Ausnehmung die Seiteneinfassung durchbricht oder dass die Ausnehmung aus der Seiteneinfassung ausgespart ist. Die Ausnehmung kann so auf die Werkzeuggestaltung optimiert ausgelegt werden. Insbesondere kann die Ausnehmung dann auch einen Bereich bilden, der während der Erstarrung der Schmelze die Schrumpfung des Gussmaterials aufnimmt, ohne dass es zu unzulässigen Spannungen an den Verschleiß-Schutzelementen kommt. Dies leistet insbesondere die Ausnehmung, die in Form einer Durchbrechung ausgebildet ist.

Eine besonders positionssichere Festlegung des Verschleiß-Schutzelement gelingt dann, wenn vorgesehen ist, dass das wenigstens eine Verschleiß-Schutzelement an gegenüberliegenden Seiten zwei Körperkanten aufweist, welche Körperbegrenzungen des Verschleiß-Schutzelements bilden, und dass im Bereich beider Körperkanten Ausnehmungen in den Seiteneinfassungen vorgesehen sind, wobei vorzugsweise vorgesehen ist, dass sich die Ausnehmungen gegenüberstehen.

Hierbei kann es auch so sein, dass die Körperkanten zueinander parallel verlaufen, und dass vorzugsweise die Ausnehmungen einander auf einer senkrecht zu den Körperkanten verlaufenden Linie gegenüberstehen.

Eine denkbare Erfindungsvariante kann so sein, dass das wenigstens eine Verschleiß-Schutzelement ein Befestigungsstück aufweist, das mit seinem rückseitigen Befestigungsabschnitt mit dem Tragabschnitt gusstechnisch verbunden ist, dass an den Befestigungsabschnitt mittelbar oder unmittelbar ein Schneidstück mit einer Schneide angeformt ist, und dass vorzugsweise das Schneidstück mit dem Tragabschnitt gusstechnisch verbunden und von diesem unterfangen ist. Dadurch, dass die Schneide mit dem Tragabschnitt unterfangen und mit diesem verbunden ist, wird eine hoch belastbare Schneidengeometrie geschaffen.

Zusätzlich kann es vorgesehen sein, dass sich an die Schneide, auf der dem Befestigungsabschnitt gegenüberliegenden Oberseite des Verschleiß-Schutzelements eine freie Ableitfläche anschließt, die vorzugsweise eben ist und die sich weiter bevorzugt bis hin zu der der Schneide gegenüberliegenden Seiten-Einfassung hin erstreckt, wobei weiter bevorzugt vorgesehen ist, dass sich an diese Seiten-Einfassung eine Führungsfläche des Guss-Grundkörpers anschließt. Über die Ableitfläche kann das von der Schneide abgetragene Material abgeführt werden. Somit wird der an die Schneide anschließende hoch belastete Bereich des Guss-Grundkörpers hier vor Verschleiß geschützt. Die Ableitfläche wird vorzugsweise gegenüberliegend dem Befestigungsabschnitt gebildet. Wenn sich an die Seiten-Einfassung eine Führungsfläche des Guss-Grundkörpers anschließt, dann kann das abgetragene Material anschließend an das Verschleiß-Schutzelement geführt abgeleitet werden.

Eine mögliche Erfindungsvariante kann derart sein, dass die Schneide zumindest bereichsweise mittels einer Seiteneinfassung des Guss-Grundkörpers abgedeckt ist. Die Seiteneinfassung schützt die Schneide, bevor diese zum eigentlichen Einsatz kommt, während des Werkzeugeinsatzes schleift sich diese Seiteneinfassung kontinuierlich ab und legt die Schneide frei.

Eine denkbare Erfindungsvariante ist derart, dass zwei oder mehrere, vorzugsweise baugleiche, Verschleiß-Schutzelemente Anreihseiten aufweisen, an denen sie, vorzugsweise abstandslos oder unter Belassung eines Spaltsmaß kleiner als 12 mm, vorzugsweis kleiner als 8 mm, besonders bevorzugt kleiner als 5 mm, aneinandergereiht sind, wobei die Anreihseiten quer zu der wenigstens einen Seiteneinfassung verlaufen, und wobei die Ausnehmung der wenigstens einen Seiteneinfassung im Abstand zu den einander gegenüberstehenden Anreihseiten der beiden Verschleiß-Schutzelemente steht. Über die aneinandergereihten und damit segmentierten Verschleiß-Schutzelemente wird die Bruchgefahr für diese Bauteile sowohl bei der Fertigung als auch beim späteren Werkzeugeinsatz reduziert. Dadurch dass die Ausnehmung beabstandet zu dem Stoßbereich zweier Verschleiß-Schutzelemente steht, überdeckt die Seiteneinfassung den Stoßbereich und schützt ihn so vor dem abrasiven Angriff des abgetragenen Materials. Stehen die Verschleiß-Schutzelemente zueinander im Abstand kleiner 12 mm, dann können sie auch seitlich mit Gusswerkstofff gehalten werden. Bei einem Abstand kleiner 8 mm wird noch ein guter Schutz vor Auswaschungen durch Verschleiß während des Werkzeugeinsatzes geboten. Ein Abstandsmaß kleiner 5 mm schützt gut vor Auswaschungen, wenn feinkörniges Verschleißmaterial über die Verschleiß-Schutzelemente geleitet wird.

Eine Erfindungsvariante kann derart sein, dass zwei oder mehrere Verschleiß-Schutzelemente, vorzugsweise baugleiche Verschleiß-Schutzelemente, aneinandergereiht sind um eine Reihe zu bilden, dass an einem oder an beiden längsseitigen Reihen-Enden ein weiteres Verschleiß-Schutzelement angeordnet ist, das eine Bauform aufweist, die von der Bauform des Verschleiß-Schutzelements abweicht, welches an das weitere Verschleiß-Schutzelement anschließt, wobei vorzugsweise vorgesehen ist, dass das weitere Verschleiß-Schutzelement eine Seitenschneide aufweist, die quer zu der Längserstreckung der Reihe verläuft, und eine Schneide, die in Richtung der Längserstreckung der Reihe verläuft. Über die baugleichen Teile wird der Teileaufwand reduziert. Das weitere Verschleiß-Schutzelement kann eine Zusatzfunktion übernehmen, beispielsweise eine Freischneidfunktion mit der Seitenschneide übernehmen.

Eine weitere Reduzierung des Teileaufwands gelingt dann, wenn vorgesehen ist, dass die beiden weiteren Verschleiß-Schutzelemente an den beiden Enden der Reihe der Verschleiß-Schutzelemente baugleich ausgebildet sind.

Wenn vorgesehen ist, dass das wenigstens eine Verschleiß-Schutzelement eine Aussparung aufweist, die in die Ausnehmung der Seiteneinfassung übergeht, dann kann das Verschleiß-Schutzelement sicher mit einem Formelement der Gussform, welche in die Aussparung eingreift, formschlüssig festgelegt werden, wobei das Formelement dann gleichzeitig den Raum für die Ausnehmung am fertigen Werkzeug schafft.

Eine mögliche Erfindungsvariante kann dergestalt sein, dass die Ausnehmung oder wenigstens ein Teil der Ausnehmungen mittels eines Zusatz-Materials, welches von dem Material des Guss-Grundkörpers abweicht, überdeckt oder zumindest teilweise ausgefüllt ist. Dann kann beispielsweise der Ausnehmung mit dem Füllmaterial ein Zusatznutzen zugeordnet werden. Im einfachsten Fall bildet das Zusatz-Material einen optisch ansprechenden Abschluss.

Gemäß der Erfindung kann es so sein, dass der Gusswerkstoff ein GJS-600-3-Stahl ist.

Vorzugsweise ist es so, dass zwischen dem Guss-Werkstoff und dem Verschleiß-Schutzelement eine Diffusionsschicht gebildet ist, die Kobalt und Eisen enthält. Die Diffusionsschicht verbindet die Verschleiß-Schutzelemente mit dem Guss-Grundkörper. Es kann so sein, dass sich vom Guss hin zum Hartmetall bis zum Ende der Diffusionsschicht ein Gradient aus Eisen und Kobalt ausbildet.

Denkbar ist, dass die Dicke der Diffusionsschicht vorzugsweise kleiner 200 µm, vorzugsweise im Bereich zwischen 50 und 200 µm, ist.

Die das Verfahren betreffend Aufgabe der Erfindung wird dadurch gelöst, dass ein oder mehrere Verschleiß-Schutzelemente, bestehend aus Hartmetall, insbesondere bestehend aus Wolframcarbid, in ein Formteil und/oder ein Gegen-Formteil eingelegt wird/werden, wobei mit dem Formteil und dem wenigstens einen Gegen-Formteil eine Gussform mit einer Kavität gebildet wird, dass eine Induktionsheizung mit wenigstens einer Induktionsspule um die der Kavität abgekehrte Außenwandung der Gussform gelegt wird, die so angeordnet ist, das sie induktiv mit dem oder den in der Kavität angeordneten Verschleiß-Schutzelement/-en ankoppelt, um dieses/diese induktiv zu erwärmen, und dass dann über einen Anguss schmelzflüssiges Eisen oder schmelzflüssiger Stahl in die Kavität gefüllt wird.

Mit der Induktionsspule werden das oder die Verschleiß-Schutzelemente induktiv auf eine Temperatur gebracht, die verhindert, dass diese aufgrund eines Temperaturschocks beim Einfüllen des schmelzflüssigen Stahls oder Gusseisens Schaden nehmen. Dadurch dass die Induktionsspule auf der Außenseite der Gussform angeordnet ist, kann sie wiederverwendet werden, was die Fertigung, im Vergleich zum Stand der Technik deutlich effizienter macht.

Zur Verringerung der Zykluszeiten kann es vorgesehen sein, dass das wenigstens eine Verschleiß-Schutzelement an wenigstens zwei zueinander versetzt angeordneten Seiten induktiv mittels der oder den Induktionsspulen erwärmt wird. Zudem wird hierdurch eine gleichmäßigere Erwärmung erreicht.

Eine Schädigung durch Thermoschock beim Gießen wird zuverlässig dann verhindert, wenn vorgesehen ist, dass das wenigsten eine Verschleiß-Schutzelement induktiv auf wenigstens 700 °C, vorzugsweise wenigstens 900 °C erwärmt wird, bevor das schmelzflüssige Eisen oder der schmelzflüssige Stahl in die Kavität gefüllt wird. Im Übrigen bildet sich dann auch zuverlässig eine feste Bindung, zwischen den Fügepartnern, wobei eine Diffussionsschicht in der Verbindungszone entstehen kann.

Gemäß einer Erfindungsgestaltung wird eine zuverlässige Fixierung des Verschleiß-Schutzelements dann erreicht, wenn vorgesehen ist, dass dieses auf eine Stützfläche des Formteils oder des Gegen-Formteils aufgelegt und seitlich an wenigstens einem über die Stützfläche vorstehendem Formelement angelegt wird, vorzugsweise zwischen zwei an gegenüberliegenden Seiten des Verschleiß-Schutzelements anliegenden Formelementen auf der Stützfläche positioniert wird.

Die Erfindung wird im Folgenden anhand von in den Zeichnungen dargestellten Ausführungsbeispielen näher erläutert. Es zeigen:
- Figur 1: eine Flügelschar in perspektivischer Ansicht,
- Figur 2: in schematischer Darstellung einen Verschleiß-Schutzelement
- Figur 3: in schematischer Darstellung ein weiteres Verschleiß-Schutzelement,
- Figur 4: ein Formteil einer Gussform in perspektivischer Darstellung,
- Figuren 5 und 6: ein Verschleiß-Schutzelement in verschiedenen Ansichten,
- Figuren 7 und 8: eine schematische Detaildarstellung eines der Figur 4 entnommenen Details,
- Figur 9: eine Gussform in Explosionsdarstellung mit dem in Figur 4 gezeigten Formteil dargestellt, ohne Anguss und Speiser,
- Figur 10: die Gussform gemäß Figur 9 im geschlossenen Zustand und
- Figur 11: ein Werkzeug, welches unter Zuhilfenahme der Gussform gemäß den Figuren 9 und 10 gefertigt wird in perspektivischer Darstellung.

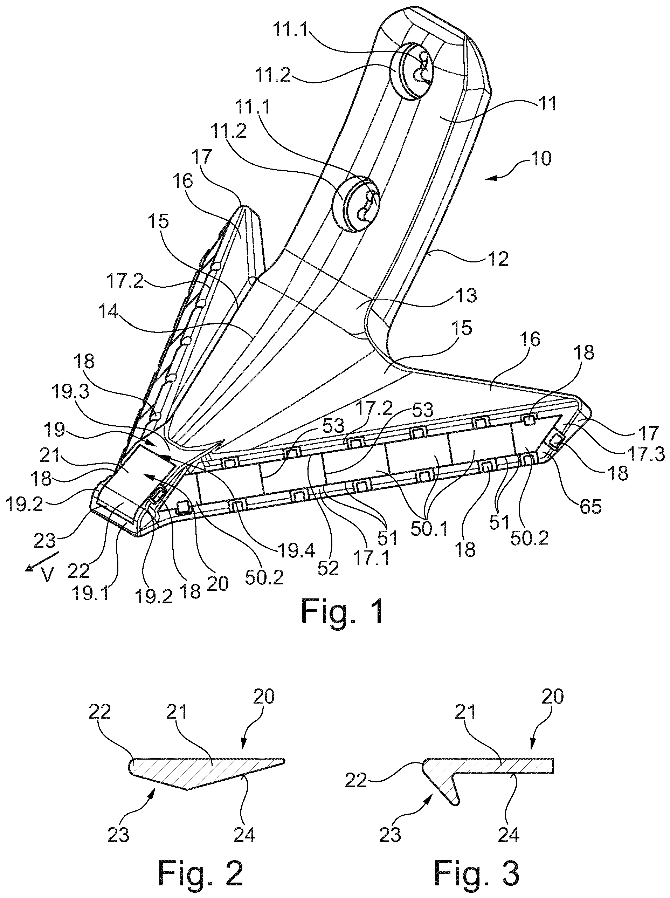

Figur 1 zeigt ein erfindungsgemäßes Werkzeug 10, das in Form einer Flügelschar ausgebildet ist. Die nachstehenden Ausführungen sollen allerdings nicht einschränkend auf eine Flügelschar verstanden werden. Vielmehr gelten die nachfolgenden Ausführungen auch für andere Werkzeuge, beispielsweise eine Grubberschar, eine Flügelschar, eine Pflugschar, ein Brechwerkzeug, ein Sieb oder eine Gegenschneide, insbesondere für einen Mähdrescher oder Feldhäcksler.

Wie Figur 1 zeigt, weist das Werkzeug 10 einen Befestigungsabschnitt 11 auf. Der Befestigungsabschnitt 11 kann ein oder mehrere Befestigungsaufnahmen 11.1 aufweisen. Beispielsweise kann es so sein, dass die wenigstens eine Befestigungsaufnahme 11.1 als Durchbruch ausgebildet ist, der in den Befestigungsabschnitt 11 eingebracht ist. Vorzugsweise ist es so, dass die Befestigungsaufnahme 11.1 eine Einsenkung 11.2 aufweist. In der Einsenkung 11.2 kann der Kopf eines Befestigungselements, beispielsweise eine Befestigungsschraube aufgenommen werden, wobei der Schaft des Befestigungselements durch die Befestigungsaufnahme 11.1 hindurchgeführt ist.

Das Werkzeug 10 weist an dem Befestigungsabschnitt 11 eine Befestigungsseite 12 auf. Die Befestigungsseite 12 ist rückseitig, also entgegengesetzt zur Werkzeug-Vorschubrichtung V orientiert.

Wie Figur 1 weiter veranschaulicht, kann es so sein, dass der Befestigungsabschnitt 11 mittels eines Übergangsabschnitts 13 in einen Hauptkörper des Werkzeugs 10 übergeht. Vorzugsweise ist es so, dass ein kontinuierlicher Übergang im Bereich einer Frontleitfläche 14 des Hauptkörpers zu dem Befestigungsabschnitt 11 geschaffen ist. Ein kontinuierlicher Übergang kann dabei von einem Übergangsabschnitt 13 gebildet sein, der die Frontleitfläche 14 stufenlos in die Vorderseite des Befestigungsabschnitts 11 überleitet.

Bei einem erfindungsgemäßen Werkzeug 10 kann es so sein, dass der Hauptkörper des Werkzeugs 10 quer zur Werkzeug-Vorschubrichtung V an gegenüberliegenden Seiten des Hauptkörpers Scharflügel 16 aufweist, die einteilig angeformt sind. Beispielsweise können die Scharflügel 16 mittels Rundungsübergängen 15, die vorliegend konkav gestaltet sein können, in den Hauptkörper bzw. in die Frontleitfläche 14 des Hauptkörpers übergehen. Denkbar ist jedoch auch ein konvexer Übergang.

Die Scharflügel 16 können beispielsweise Tragabschnitte 17 aufweisen. Die Tragabschnitte 17 sind in Werkzeug-Vorschubrichtung V vorne an den Scharflügel 16 angeordnet.

Die Tragabschnitt 17 sind mit einem oder mehreren Verschleiß-Schutzelementen 50.1 und 50.2 belegt. Dabei kann es vorzugsweise so sein, dass mehrere Verschleiß-Schutzelemente 50.1 und 50.2 in einer Reihe nebeneinander auf dem Tragabschnitt 17 befestigt sind. Alle oder ein Teil der Verschleiß-Schutzelemente 50.1, 50.2 können abstandslos oder mit Abstand aneinandergereiht sein.

Die Verschleiß-Schutzelement der 50.1, 50.2 bilden eine Reihe. An einem oder beiden längsseitigen Enden dieser Reihe können Verschleiß-Schutzelemente 50.2 angeordnet sein, deren Bauform von der Bauform des benachbarten Verschleiß-Schutzelements 50.1 abweichen kann.

Vorzugsweise sind die Verschleiß-Schutzelemente 50.2 an den gegenüberliegenden Reihenenden baugleich ausgebildet, sodass Gleichteile verwendet werden können.

Wie Figur 1 zeigt sind die Verschleiß-Schutzelemente 50.2 an den gegenüberliegenden Reihenenden baugleich, jedoch um 180° zueinander verdreht montiert.

Vorzugsweise ist es so, dass die Verschleiß-Schutzelemente 50.1 und/oder 50.2 als plattenförmige Elemente mit konstanter Materialdicke ausgeführt sind.

Die Verschleiß-Schutzelemente 50.1, 50.2 sind vorliegend mit ihren benachbarten Seitenflächen 53 aneinandergereiht, wie dies Figur 1 zeigt. In Werkzeug-Vorschubrichtung V vorne bilden die Verschleiß-Schutzelemente 50.1 und/oder 50.2 Schneiden 51. Dabei kann es so sein, dass alle oder ein Teil der Verschleiß-Schutzelemente 50.1, 50.2 eine durchgängige Schneide bilden, wie dies Figur 1 zeigt.

Das oder die Verschleiß-Schutzelemente 50.1 und/oder 50.2 können gegenüberliegend der Schneide 51 von einer Körperkante begrenzt sein, die eine Anlagekante 52 bildet. Denkbar ist es, dass die die Schneide 51 bildende Körperkante parallel zu der Anlagekante 52 verläuft, wie Figur 1 zeigt.

Wenigstens ein Teil der Verschleiß-Schutzelemente 50.1, 50.2 ist an gegenüberliegenden Seiten an Seiteneinfassungen 17.1,17.2 angelegt. Dabei sind die Seiteneinfassungen 17.1, 17.2, 17.3 einteilig mit dem als Guss-Körper ausgebildeten Scharflügel 16 ausgebildet.

Wenigstens eine der Seiteneinfassungen 17.1, 17.2, 17.3, vorzugsweise zwei Seiteneinfassungen 17.1, 17.2 oder alle Seiteneinfassungen, sind mit Ausnehmungen 18 ausgestattet. Die Ausnehmungen 18 grenzen an die wenigstens eine Körperkante des Verschleiß-Schutzelements 50.1, 50.2 an. Vorzugsweise grenzen die Ausnehmungen 18 an die Schneide 51 und/oder die gegenüberliegende Anlegekante 52 an. Vorzugsweise ist es so, dass die Ausnehmungen 18 gegenüberliegend auf einer virtuellen Linie angeordnet sind, die senkrecht zur Schneide 51 und oder der Anlegekante 52 verläuft, wie Figur 1 zeigt.

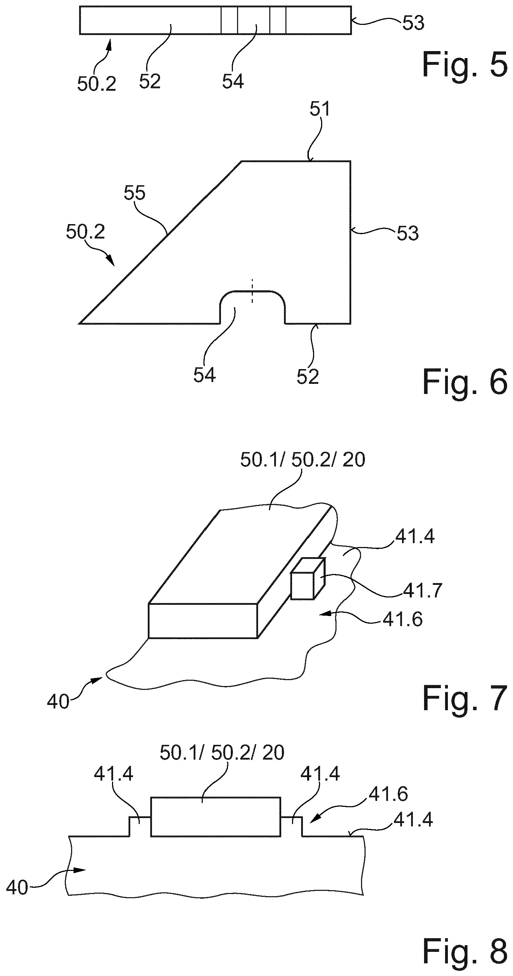

Das Werkzeug 10 kann so ausgebildet sein, dass das Verschleiß-Schutzelement 50.2, welches am freien Ende des Scharflügels 16 angeordnet ist, eine Gestalt aufweist, die entsprechend den Figuren 5 und 6 ausgebildet ist.

Wie die Figuren 5 und 6 zeigen, kann ein Verschleiß-Schutzelement 50.2 nach der Erfindung so ausgestaltet sein, dass es plattenförmig, vorzugsweise mit gleicher Dicke ausgebildet ist. Das Verschleiß-Schutzelement kann eine seitliche Aussparung 54 aufweisen, die vorteilhaft von der Anlegekante 52 ausgespart ist.

Denkbar ist es, dass das Verschleiß-Schutzelement 50.2 zusätzlich zu der Schneide 51 eine Seitenschneide 55 aufweist, die zu der Schneide 51 im Winkel verlaufen kann. Vorzugsweise ist zwischen der Schneide 51 und der Seitenschneide 55 ein stumpfer Winkel eingeschlossen.

Ein erfindungsgemäßes Verschleiß-Schutzelement 50.2 kann eine Seitenfläche 53 aufweisen, mit der es an ein benachbartes Verschleiß-Schutzelement 50.1angereiht werden kann.

Figur 1 veranschaulicht, dass ein Verschleiß-Schutzelement 20 gemäß der Erfindung eine in Werkzeug Vorschubrichtung V vordere Schneide 22 aufweisen kann.

Entgegensetzt zur Werkzeug Forschungsrichtung V hinter der Schneide 22 kann beispielsweise ein Befestigungsstück 21 einteilig angeformt sein. Denkbar ist es, dass das Befestigungsstück 21 einen unterseitigen Befestigungsabschnitt 24 aufweist, mittels dem es mit einem Schneidelementträger 19, der zwischen den beiden Scharflügeln 16 angeordnet sein kann, stoffschlüssig verbunden ist.

Der Schneidelementträger 19 kann beispielsweise einen Stützabschnitt 19.1 aufweisen, der die Schneide 22 und/oder den Befestigungsabschnitt 24 an deren Unterseite unterfängt, wie Figur 1 zeigt.

Zusätzlich oder alternativ kann es auch so sein, dass das Schneidelement 20 an seinen gegenüberliegenden Seiten von Körperkanten begrenzt ist, welche quer zur Längserstreckung der Schneide 22 verlaufen. Wenigstens eine dieser Körperkanten kann zumindest bereichsweise an einer Seiteneinfassung 19.2 des Schneidelementträgers 19 anliegen. Eine oder beide der Seiteneinfassungen 19.2 kann mit wenigstens einer Ausnehmung 18 versehen sein, wobei sich die Ausnehmung 18 unmittelbar an die Körperkante des Verschleiß-Schutzelement 50.2 anschließen kann.

Die Oberseite des Verschleiß-Schutzelements 20 kann, beispielsweise im Anschluss an die Schneide 22, eine obere Ableitfläche bilden, über die abgetragenes Material während des Werkzeugeinsatzes abfließen kann. Vorzugsweise ist es so, dass die Ableitfläche in eine Führungsfläche 19.3 des Schneidelementträgers 19 rückseitig, also entgegengesetzt zur Werkzeug-Vorschubrichtung V, übergeht. Vorzugsweise ergibt sich hier ein bündiger Übergang. Denkbar ist es auch, dass der Schneidelementträger 19 eine rückwärtige Seiteneinfassung 19.4 bildet, die das Verschleiß-Schutzelement 20 auf seiner der Schneide 22 gegenüberliegenden Rückseite abstützt.

In Figur 2 ist eine mögliche Ausgestaltung des Verschleiß-Schutzelements 20 im Querschnitt dargestellt. Wie diese Darstellung veranschaulicht, kann es so sein, dass das Verschleiß-Schutzelement 20 eine Verdickung 23 aufweist. Die Verdickung 23 kann beispielsweise die Schneide 22 zumindest teilweise bilden. Denkbar ist es, dass die Verdickung 23 einen Übergang zwischen dem Bereich des Verschleiß-Schutzelements 20 bildet, welcher die Schneide 22 formt, und dem Bereich, der den Befestigungsabschnitt 24 bildet.

Denkbar ist es auch, dass das Verschleiß-Schutzelement 20 als Platte mit vorzugsweise konstanter Dicke ausgebildet ist.

Figur 3 zeigt eine weitere Ausgestaltungsvariante eines möglichen Verschleiß-Schutzelements 20. Wie diese Darstellung zeigt, kann es so sein, dass das Befestigungsstück 21 einen unteren Befestigungsabschnitt 24 aufweist. Das Befestigungsstück 21 kann schenkelartig mit variierender oder gleichbleibender Dicke ausgebildet sein. Figur 3 zeigt eine gleichbleibende Schenkeldicke.

Es kann so sein, dass sich an das Befestigungsstück 21 endseitig eine Verdickung 23 anschließt, die die Schneide 22 bildet. Dabei kann es insbesondere so sein, dass sich im Querschnitt eine L-Form ergibt, wie Figur 3 zeigt.

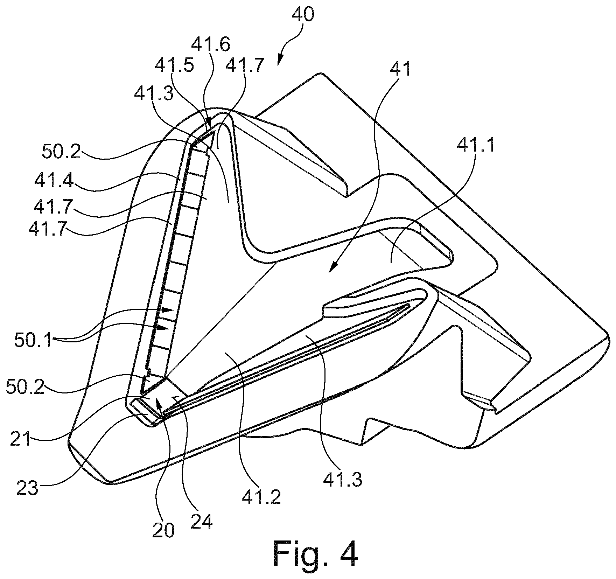

Zur Fertigung des Werkzeugs 10 wird eine Gussform mit einem Formteil 40 verwendet, welches in Figur 4 näher gezeigt ist. Wie diese Darstellung veranschaulicht, besitzt das Formteil 40 eine eingetiefte Formaufnahme 41. In der Formaufnahme 41 bildet sich ein Hauptmuldenbereich 41.2 und daran anschließend ein 1. Muldenbereich 41.1 sowie Flügelformbereiche 41.3. Der 1. Muldenbereich 41.1 soll dazu dienen den Befestigungsabschnitt 11 zu formen. Die Flügelformbereiche 41.3 sollen dazu dienen die Scharflügel 16 zur formen. Der Hauptmuldenbereich 41.2 soll dazu dienen den zwischen den Scharflügeln 16 gebildeten Basisbereich des Werkzeugs 10 zu formen.

Figur 4 veranschaulicht, dass in den Flügelformbereichen 41.3 Rücksprünge 41.4 und 41.5 vorgesehen sind, an die sich eine Stützfläche 41.6 anschließt. Auf die Stützfläche 41.6 können die Verschleiß-Schutzelemente 50.1 und 50.2 aufgelegt und aneinandergereiht werden, wie Figur 4 zeigt.

Zur Fixierung der Verschleiß-Schutzelemente 50.1, 50.2 sind Formelemente 41.7 an gegenüberliegenden Seiten, vorzugsweise eines jeden Verschleiß-Schutzelements 50.1, 50.2, vorgesehen. Die Formelemente 41.7 stehen über die Stützfläche 41.6 vor und zwar derart, dass die Verschleiß-Schutzelemente 50.1 und/oder 50.2 mit ihren Körperkanten daran anliegen. Dies ist in den Figuren 7 und 8 verdeutlicht.

Wie diese Darstellungen zeigen, kann es so sein, dass auf einer (siehe Figur 7) oder auf 2 Seiten eines Verschleiß-Schutzelements 50.1, 50.2, 20 Formelemente 41.7 vorgesehen sind, an denen das Verschleiß-Schutzelement 50.1, 50.2 und/oder 20 anliegt.

Die Formteile 41.7 halten die Verschleiß-Schutzelemente 50.1, 50.2 und/oder 20 in der Gussform in Position.

Figur 4 veranschaulicht, dass in prinzipiell gleicher Weise das Verschleiß-Schutzelement 20 frontseitig in der Gussform, nämlich in dem Formteil 40 fixiert ist.

Nachdem die Verschleiß-Schutzelemente 50.1, 50.2 und 20 in das Formteil 40 eingelegt wurden, wird die Gussform mittels eines Gegen-Formteils 60 geschlossen, derart dass sich eine Kavität zwischen dem Gegen-Formteil 60 und dem Formteil 40 bildet, welche die Negativform des zu fertigenden Werkzeugs bildet.

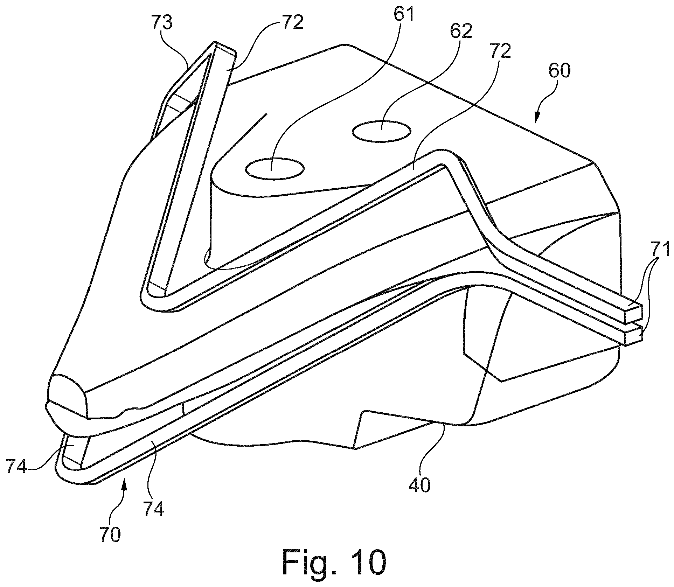

Wie Figur 10 veranschaulicht, wird, nachdem die Gussform geschlossen wurde, eine Induktionsheizung 70 außenseitig über die Gussform gestellt. Die Induktionsheizung 70 weist zwei Stromanschlüsse 71 auf, die in Innenschenkel 72 und Außenschenkel 74 übergehen. Die Außenschenkel 74 stehen zueinander V-förmig im Winkel. Ebenso stehen die Innenschenkel 72 zueinander V-förmig. Für eine Überleitung des Stromflusses von den Innenschenkeln 72 zu den Außenschenkeln 74 ist ein Übergangsabschnitt 73 vorgesehen. Die Innenschenkel 72 und die Außenschenkel 74 bilden eine oder mehrere Induktionsspulen.

Wie Figur 10 zeigt, ist die Induktionsheizung 70 so angeordnet, dass die Induktionsspulen längs der Innen- und Außenschenkel 72 und 74 im geringen Abstand zu der Oberseite und der Unterseite der Gussform verlaufen.

Die Außenschenkel 74 verlaufen in Längsrichtung der Tragabschnitte 17 des Formteils 40. Die Innenschenkel 72 verlaufen auf der gegenüberliegenden Rückseite der Verschleiß-Schutzelemente 50.1, 50.2, 20.

Die Gussform ist so gestaltet, dass die eine oder die mehreren Induktionsspulen induktiv an das Hartmetall der Verschleiß-Schutzelemente der 50.1, 50.2 und/oder 20 ankoppelt/-n, um dieses zu erwärmen. Da die Gussform nicht von einem Material gebildet wird, welches induktiv ankoppelt, bleibt sie bei der induktiven Erwärmung der Verschleiß-Schutzelemente 50.1, 50.2 und/oder 20 im Wesentlichen kalt.

Wenn die Verschleiß-Schutzelemente 50.1, 50.2 und/oder 20 eine ausreichend hohe Temperatur erreicht haben, so kann schmelzflüssiges Stahlmaterial oder Gusseisenmaterial über einen Speiser 61 in die Gussform eingefüllt werden. Dann füllt sich die Kavität der Gussform mit dem schmelzflüssigen Stahl oder Gusseisen. Überflüssige Schmelze steigt über eine Steigleitung 62 aus der Kavität.

Die Schmelze umfließt die Verschleiß-Schutzelemente 50.1, 50.2, 20 und bildet dabei insbesondere die Seiteneinfassungen 17.1, 17.2, 17.3, 19.2, 19.4. Dort, wo die Formelemente 41.7 angeordnet sind, entstehen später am fertigen Werkstück 10 die Ausnehmungen 18, die in Figur 1 gezeigt sind.

Nachdem die Schmelze erstarrt ist, hat sich an der Grenzfläche zwischen den Verschleiß-Schutzelementen 50.1, 50.2 und/oder 20 eine gusstechnische Verbindung gebildet. Die gusstechnische Verbindung bildet eine stoffschlüssige Verbindung, welche im Übergangsbereich des Hartmetall-Materials zum Stahlguss- oder Gusseisen-Material eine Diffusionsschicht bildet.

Die Diffusionsschicht enthält beispielsweise Kobalt, welches aus dem Hartmetall stammt, und Eisen des Stahlguss- bzw. Gusseisen-Materials. Die Diffusionsschicht verbindet die Verschleiß-Schutzelemente 50.1, 50.2 und/oder 20 mit dem Guss-Grundkörper. Es kann so sein, dass sich vom Guss hin zum Hartmetall (Wolframcarbid) bis zum Ende der Diffusionsschicht ein Gradient aus Eisen und Kobalt ausbildet.

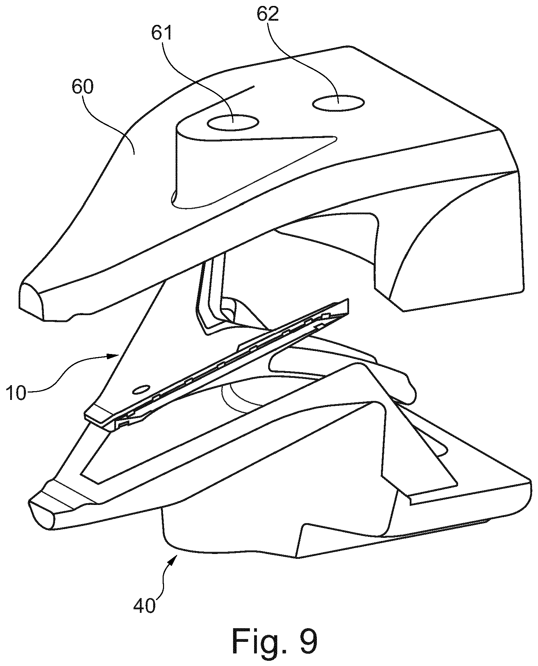

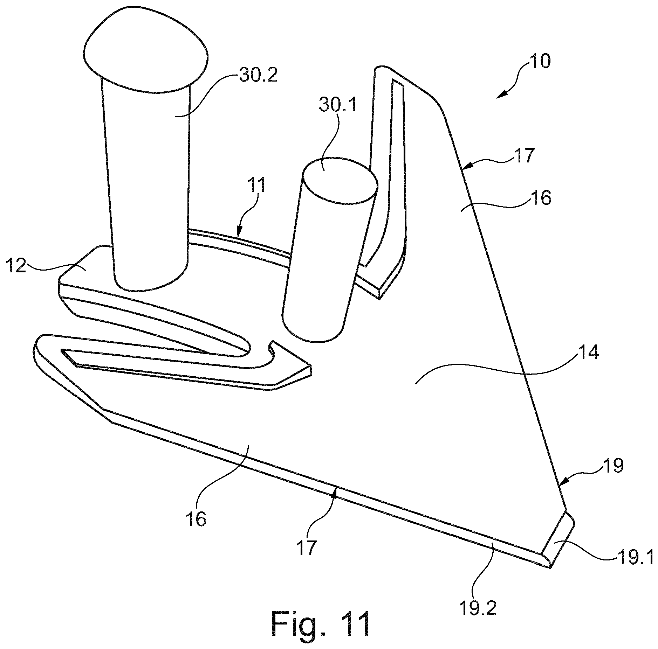

Nachdem die Schmelze erstarrt ist, kann die Gussform getrennt werden, wie Figur 9 zeigt, wobei aus Gründen der Übersichtlichkeit die Darstellung des Werkzeugs 10 ohne Anguss-Formstück und Speiser-Formstück 30.1, 30.2 (Fig.11) gewählt wurde.

Figur 11 zeigt das aus der Gussform entnommene Werkzeug 10. Erkennbar sind noch das Speiser-Formstück und das Anguss-Formstück 30.1 und 30.2, die einteilig mit dem Werkzeug 10 verbunden sind. Diese beiden Formstücke 30.1, 30.2 müssen in einem Nachbearbeitungsschritt spanend abgetrennt werden.

Abschließend lässt sich auch noch die wenigstens eine Befestigungsaufnahme 11.1 in einem spanenden Verfahren in den Befestigungsabschnitt 11 einbringen. Denkbar ist es auch, dass wenigstens eine Befestigungsaufnahme 11.1 bereits an der Gussform vorhanden ist, also diese im Gießprozess geformt und gegebenenfalls nachbearbeitet wird.

## Patentansprüche

1. Werkzeug, insbesondere für die Bodenbearbeitung, insbesondere landwirtschaftliches Bodenbearbeitungswerkzeug oder bauwirtschaftliches Bodenbearbeitungswerkzeug, mit einem Guss-Grundkörper, der aus einem Stahl- oder Gusseisen-Werkstoff besteht und der einen Tragabschnitt (17) aufweist, wobei an dem Tragabschnitt (17) ein oder mehrere Verschleiß-Schutzelemente (20, 50.1, 50.2), bestehend aus Hartmetall, insbesondere bestehend aus Wolframcarbid, mittels eines Befestigungsabschnitts (24) abgestützt und gusstechnisch mit dem Tragabschnitt (17) verbunden sind, wobei das wenigstens eine Verschleiß-Schutzelement (20, 50.1, 50.2) an gegenüberliegenden Seiten mittels Seiteneinfassungen (17.1, 17.2, 17.3; 19.2, 19.4) des Guss-Grundkörpers zumindest bereichsweise eingefasst ist,
**dadurch gekennzeichnet,**
**dass** wenigstens eine der Seiteneinfassungen (17.1, 17.2, 17.3; 19.2, 19.4), vorzugsweise beide Seiteneinfassungen (17.1, 17.2, 17.3; 19.2, 19.4), mittels einer Ausnehmung (18) unterbrochen ist/sind, und dass die Ausnehmung (18) bis zu einer Körperbegrenzung des Verschleiß-Schutzelements (20, 50.1, 50.2) geführt ist.

2. Werkzeug nach Anspruch 1, **dadurch gekennzeichnet, dass** die Ausnehmung (18) die Seiteneinfassung (17.1, 17.2, 17.3; 19.2, 19.4) durchbricht oder dass die Ausnehmung (18) aus der Seiteneinfassung (17.1, 17.2, 17.3; 19.2, 19.4) ausgespart ist.

3. Werkzeug nach Anspruch 1 oder 2, **dadurch gekennzeichnet, dass** das wenigstens eine Verschleiß-Schutzelement (20, 50.1, 50.2) an gegenüberliegenden Seiten zwei Körperkanten aufweist, welche Körperbegrenzungen des Verschleiß-Schutzelements (20, 50.1, 50.2) bilden, und dass an beiden Körperkanten Ausnehmungen (18) vorgesehen sind, wobei vorzugsweise vorgesehen ist, dass sich die Ausnehmungen gegenüberstehen.

4. Werkzeug nach Anspruch 3, **dadurch gekennzeichnet, dass** die Körperkanten zueinander parallel verlaufen, und dass vorzugsweise die Ausnehmungen (18) einander auf einer senkrecht zu den Körperkanten verlaufenden Linie gegenüberstehen.

5. Werkzeug nach einem der Ansprüche 1 bis 4, **dadurch gekennzeichnet, dass** das wenigstens eine Verschleiß-Schutzelement (20, 50.1, 50.2) ein Befestigungsstück (21) aufweist, das mit seinem rückseitigen Befestigungsabschnitt (24) mit dem Tragabschnitt (17) gusstechnisch verbunden ist, dass an den Befestigungsabschnitt (24) mittelbar oder unmittelbar ein Schneidstück mit einer Schneide (22, 51) angeformt ist, und dass vorzugsweise das Schneidstück mit dem Tragabschnitt (17) gusstechnisch verbunden und von diesem unterfangen ist.

6. Werkzeug nach Anspruch 5, **dadurch gekennzeichnet, dass** sich an die Schneide (22, 51), auf der dem Befestigungsabschnitt (24) gegenüberliegenden Oberseite des Verschleiß-Schutzelements (20, 50.1, 50.2) eine freie Ableitfläche anschließt, die vorzugsweise eben ist und die sich weiter bevorzugt bis hin zu der der Schneide (22) gegenüberliegenden Seiten-Einfassung (19.4) hin erstreckt, wobei weiter bevorzugt vorgesehen ist, dass sich an diese Seiten-Einfassung (19.4) eine Führungsfläche (19.3) des Guss-Grundkörpers anschließt .

7. Werkzeug nach Anspruch 6, **dadurch gekennzeichnet, dass** die Schneide (22) zumindest bereichsweise mittels einer Seiteneinfassung (17.1, 17.3) des Guss-Grundkörpers abgedeckt ist.

8. Werkzeug nach einem der Ansprüche 1 bis 7, **dadurch gekennzeichnet, dass** zwei oder mehrere, vorzugsweise baugleiche, Verschleiß-Schutzelemente (50.1, 50.2) Anreihseiten (53) aufweisen, an denen sie, vorzugsweise abstandslos oder unter Belassung eines Anreih-Abstands kleiner als 12 mm, vorzugsweise kleiner als 8 mm, besonders bevorzugt kleiner als 5 mm, aneinandergereiht sind, wobei die Anreihseiten (53) quer zu der wenigstens einen Seiteneinfassung (17.1, 17.2; 19.2) verlaufen, und wobei die Ausnehmung (18) der wenigstens einen Seiteneinfassung (17.1, 17.2, 17.3; 19.2, 19.4) im Abstand zu den einander gegenüberstehenden Anreihseiten (53) der beiden Verschleiß-Schutzelemente (50.1, 50.2) steht.

9. Werkzeug nach einem der Ansprüche 1 bis 8, **dadurch gekennzeichnet, dass** zwei oder mehrere Verschleiß-Schutzelemente (50.1), vorzugsweise baugleiche, Verschleiß-Schutzelemente (50.1), aneinander gereiht sind um eine Reihe zu bilden, dass an einem oder an beiden längsseitigen Reihen-Enden ein weiteres Verschleiß-Schutzelement (50.2) angeordnet ist, das eine Bauform aufweist, die von der Bauform des Verschleiß-Schutzelements (50.1) abweicht, welches an das weitere Verschleiß-Schutzelement (50.2) anschließt, wobei vorzugsweise vorgesehen ist, dass das weitere Verschleiß-Schutzelement (50.2) eine Seitenschneide (55) aufweist, die quer zu der Längserstreckung der Reihe verläuft und eine Schneide (51), die in Richtung der Längserstreckung der Reihe verläuft.

10. Werkzeug nach Anspruch 9, **dadurch gekennzeichnet, dass** die beiden weiteren Verschleiß-Schutzelemente (50.2) an den beiden Enden der Reihe der Verschleiß-Schutzelemente (50.1) baugleich ausgebildet sind.

11. Werkzeug nach einem der Ansprüche 1 bis 10, **dadurch gekennzeichnet, dass** das wenigstens eine Verschleiß-Schutzelement (50.2,) eine Aussparung (54) aufweist, die in die Ausnehmung (18) der Seiteneinfassung (17.1, 17.2, 17.3; 19.2, 19.4) übergeht.

12. Werkzeug nach einem der Ansprüche 1 bis 11, **dadurch gekennzeichnet, dass** es eine Schar, insbesondere eine Grubberschar, eine Flügelschar, eine Pflugschar, ein Brechwerkzeug, ein Sieb oder eine Gegenschneide, insbesondere für einen Mähdrescher oder Feldhäcksler, ist.

13. Werkzeug nach einem der Ansprüche 1 bis 12, **dadurch gekennzeichnet, dass** die Ausnehmung (18) oder wenigstens ein Teil der Ausnehmungen (18) mittels eines Zusatz-Materials, welches von dem Material des Guss-Grundkörpers abweicht, überdeckt oder zumindest teilweise ausgefüllt ist.

14. Verfahren zur Herstellung eines Werkzeugs (10) nach einem der Ansprüche 1 bis 13, insbesondere landwirtschaftliches Bodenbearbeitungswerkzeug oder bauwirtschaftliches Bodenbearbeitungswerkzeug, wobei ein oder mehrere Verschleiß-Schutzelemente (20, 50.1, 50.2), bestehend aus Hartmetall, insbesondere bestehend aus Wolframcarbid, in ein Formteil (40) und/oder ein Gegen-Formteil (60) eingelegt wird/werden, wobei mit dem Formteil (40) und dem wenigstens einen Gegen-Formteil (60) eine Gussform mit einer Kavität gebildet wird, dass eine Induktionsheizung (70) mit wenigstens einer Induktionsspule um die der Kavität abgekehrte Außenwandung der Gussform gelegt wird, die so angeordnet ist, dass sie induktiv mit dem oder den in der Kavität angeordneten Verschleiß-Schutzelement/-en ankoppelt, um dieses/diese induktiv zu erwärmen, und dass dann über einen Anguss (62) schmelzflüssiges Eisen oder schmelzflüssiger Stahl in die Kavität gefüllt wird.

15. Verfahren nach Anspruch 14, **dadurch gekennzeichnet, dass** das wenigstens eine Verschleiß-Schutzelement (20, 50.1, 50.2) an wenigstens zwei zueinander versetzt angeordneten Seiten induktiv mittels der oder den Induktionsspulen erwärmt wird.

16. Verfahren nach einem der Ansprüche 14 oder 15, **dadurch gekennzeichnet, dass** das wenigsten eine Verschleiß-Schutzelement (20, 50.1, 50.2) induktiv auf wenigstens 700 °C, vorzugsweise wenigstens 900 °C erwärmt wird, bevor das schmelzflüssige Eisen oder der schmelzflüssige Stahl in die Kavität gefüllt wird.

17. Verfahren nach einem der Ansprüche 14 bis 16, **dadurch gekennzeichnet, dass** das Verschleiß-Schutzelement (20, 50.1, 50.2) auf eine Stützfläche (41.7) des Formteils (40) oder des Gegen-Formteils (60) aufgelegt und seitlich an wenigstens einem über die Stützfläche (41.6) vorstehendem Formelement (41.7) angelegt wird, vorzugsweise zwischen zwei an gegenüberliegenden Seiten des Verschleiß-Schutzelements anliegenden Formelementen (41.7) auf der Stützfläche (41.6) positioniert wird.

18. Verfahren nach einem der Ansprüche 14 bis 17 zur Fertigung eines Werkzeugs nach einem der Ansprüche 1 bis 13.

## Claims

1. Tool, in particular for ground engaging, in particular an agricultural ground engaging tool or construction ground engaging tool, comprising a cast base body which consists of a steel or cast-iron material and which comprises a support section (17), wherein one or more wear-protection elements (20, 50.1, 50.2), consisting of cemented carbide, in particular consisting of tungsten carbide, are supported on the support section (17) by means of a fastening section (24) and are connected to the support section (17) by casting, wherein the at least one wear-protection element (20, 50.1, 50.2) is enclosed at least in some areas on opposite sides by means of side enclosures (17.1, 17.2, 17.3; 19.2, 19.4) of the cast base body,
**characterized in that**
at least one of the side enclosures (17.1, 17.2, 17.3; 19.2, 19.4), preferably both side enclosures (17.1, 17.2, 17.3; 19.2, 19.4), is/are interrupted by means of a recess (18), and **in that** the recess (18) extends as far as a body boundary of the wear-protection element (20, 50.1, 50.2).

2. Tool according to claim 1, **characterized in that** the recess (18) breaks through the side enclosure (17.1, 17.2, 17.3; 19.2, 19.4) or **in that** the recess (18) is recessed from the side enclosure (17.1, 17.2, 17.3; 19.2, 19.4).

3. Tool according to claim 1 or 2, **characterized in that** the at least one wear-protection element (20, 50.1, 50.2) comprises two body edges on opposite sides, which body edges form body boundaries of the wear-protection element (20, 50.1, 50.2), and **in that** recesses (18) are provided at both body edges, wherein it is preferably provided that the recesses face one another.

4. Tool according to claim 3, **characterized in that** the body edges extend parallel to one another, and **in that** preferably the recesses (18) face one another on a line extending perpendicular to the body edges.

5. Tool according to any one of claims 1 to 4, **characterized in that** the at least one wear-protection element (20, 50.1, 50.2) comprises a fastening piece (21), which is connected by casting to the support section (17) by its rear fastening section (24), **in that** a cutting piece having a cutting edge (22, 51) is integrally formed indirectly or directly on the fastening section (24), and **in that** preferably the cutting piece is connected by casting to the support section (17) and is supported by the latter from below.

6. Tool according to claim 5, **characterized in that**, adjoining the cutting edge (22, 51), on the top side of the wear-protection element (20, 50.1, 50.2) opposite the fastening section (24), there is a free deflection surface which is preferably planar and which further preferably extends as far as the side enclosure (19.4) opposite the cutting edge (22), wherein it is further preferably provided that a guide surface (19.3) of the cast base body adjoins this side enclosure (19.4).

7. Tool according to claim 6, **characterized in that** the cutting edge (22) is covered at least in some areas by means of a side enclosure (17.1, 17.3) of the cast base body.

8. Tool according to any one of claims 1 to 7, **characterized in that** two or more, preferably structurally identical, wear-protection elements (50.1, 50.2) comprise adjoining faces (53), at which they are arranged in a row, preferably without spacing or while leaving an adjoining spacing of less than 12 mm, preferably less than 8 mm, particularly preferably less than 5 mm, wherein the adjoining faces (53) extend transversely to the at least one side enclosure (17.1, 17.2; 19.2), and wherein the recess (18) of the at least one side enclosure (17.1, 17.2, 17.3; 19.2, 19.4) is spaced apart from the mutually opposite adjoining faces (53) of the two wear-protection elements (50.1, 50.2).

9. Tool according to any one of claims 1 to 8, **characterized in that** two or more wear-protection elements (50.1), preferably structurally identical wear-protection elements (50.1), are arranged in a row in order to form a row, **in that** a further wear-protection element (50.2) is arranged at one or at both longitudinal row ends, which further wear-protection element has a constructional form which differs from the constructional form of the wear-protection element (50.1) which adjoins the further wear-protection element (50.2), wherein it is preferably provided that the further wear-protection element (50.2) comprises a side cutting edge (55) which extends transversely to the longitudinal extension of the row and a cutting edge (51) which extends in the direction of the longitudinal extension of the row.

10. Tool according to claim 9, **characterized in that** the two further wear-protection elements (50.2) at the two ends of the row of wear-protection elements (50.1) are configured structurally identically.

11. Tool according to any one of claims 1 to 10, **characterized in that** the at least one wear-protection element (50.2,) comprises a cutout (54) which merges into the recess (18) of the side enclosure (17.1, 17.2, 17.3; 19.2, 19.4).

12. Tool according to any one of claims 1 to 11, **characterized in that** it is a share, in particular a cultivator share, a wing share, a ploughshare, a crushing tool, a screen or a counter-blade, in particular for a combine harvester or forage harvester.

13. Tool according to any one of claims 1 to 12, **characterized in that** the recess (18) or at least part of the recesses (18) is covered or at least partially filled by means of an additional material which differs from the material of the cast base body.

14. Method for producing a tool (10) according to any one of claims 1 to 13, in particular an agricultural ground engaging tool or construction ground engaging tool, wherein one or more wear-protection elements (20, 50.1, 50.2), consisting of cemented carbide, in particular consisting of tungsten carbide, is/are inserted into a mold part (40) and/or a counter-mold part (60), wherein a casting mold having a cavity is formed by the mold part (40) and the at least one counter-mold part (60), in that an induction heater (70) having at least one induction coil is placed around the outer wall of the casting mold facing away from the cavity, which is arranged such that it inductively couples to the wear-protection element/elements arranged in the cavity in order to inductively heat it/them, and in that molten iron or molten steel is then filled into the cavity via a sprue (62).

15. Method according to claim 14, **characterized in that** the at least one wear-protection element (20, 50.1, 50.2) is inductively heated on at least two sides arranged offset relative to one another by means of the induction coil or coils.

16. Method according to claim 14 or 15, **characterized in that** the at least one wear-protection element (20, 50.1, 50.2) is inductively heated to at least 700 °C, preferably at least 900 °C, before the molten iron or molten steel is filled into the cavity.

17. Method according to any one of claims 14 to 16, **characterized in that** the wear-protection element (20, 50.1, 50.2) is placed on a support surface (41.7) of the mold part (40) or of the counter-mold part (60) and is placed laterally against at least one mold element (41.7) projecting beyond the support surface (41.6), preferably being positioned on the support surface (41.6) between two mold elements (41.7) bearing against opposite sides of the wear-protection element.

18. Method according to any one of claims 14 to 17 for producing a tool according to any one of claims 1 to 13.

## Revendications

1. Outil, en particulier pour le travail du sol, en particulier outil agricole de travail du sol ou outil de travail du sol pour le secteur de la construction, comprenant un corps de base coulé qui est constitué d'un matériau en acier ou en fonte et qui présente une section de support (17), dans lequel un ou plusieurs éléments de protection contre l'usure (20, 50.1, 50.2), constitués de métal dur, en particulier constitués de carbure de tungstène, sont supportés sur la section de support (17) au moyen d'une section de fixation (24) et sont reliés à la section de support (17) par coulée, dans lequel l'au moins un élément de protection contre l'usure (20, 50.1, 50.2) est entouré au moins par zones sur des côtés opposés au moyen d'encadrements latéraux (17.1, 17.2, 17.3 ; 19.2, 19.4) du corps de base coulé,
**caractérisé en ce que**
au moins l'un des encadrements latéraux (17.1, 17.2, 17.3 ; 19.2, 19.4), de préférence les deux encadrements latéraux (17.1, 17.2, 17.3 ; 19.2, 19.4), est/sont interrompu(s) au moyen d'un évidement (18), et **en ce que** l'évidement (18) s'étend jusqu'à une limite de corps de l'élément de protection contre l'usure (20, 50.1, 50.2).

2. Outil selon la revendication 1, **caractérisé en ce que** l'évidement (18) traverse l'encadrement latéral (17.1, 17.2, 17.3 ; 19.2, 19.4) ou **en ce que** l'évidement (18) est ménagé dans l'encadrement latéral (17.1, 17.2, 17.3 ; 19.2, 19.4).

3. Outil selon la revendication 1 ou 2, **caractérisé en ce que** l'au moins un élément de protection contre l'usure (20, 50.1, 50.2) présente, sur des côtés opposés, deux arêtes de corps qui forment des limites de corps de l'élément de protection contre l'usure (20, 50.1, 50.2), et **en ce que** des évidements (18) sont prévus au niveau des deux arêtes de corps, dans lequel il est de préférence prévu que les évidements se font face.

4. Outil selon la revendication 3, **caractérisé en ce que** les arêtes de corps s'étendent parallèlement l'une à l'autre, et **en ce que**, de préférence, les évidements (18) se font face sur une ligne s'étendant perpendiculairement aux arêtes de corps.

5. Outil selon l'une des revendications 1 à 4, **caractérisé en ce que** l'au moins un élément de protection contre l'usure (20, 50.1, 50.2) présente une pièce de fixation (21) qui est reliée par coulée, par sa section de fixation arrière (24), à la section de support (17), **en ce qu'**une pièce de coupe comprenant une arête de coupe (22, 51) est formée d'un seul tenant, indirectement ou directement, sur la section de fixation (24), et **en ce que**, de préférence, la pièce de coupe est reliée par coulée à la section de support (17) et est sous-engagée par celle-ci.

6. Outil selon la revendication 5, **caractérisé en ce que**, à la suite de l'arête de coupe (22, 51), sur le côté supérieur de l'élément de protection contre l'usure (20, 50.1, 50.2) opposé à la section de fixation (24), se raccorde une surface de déviation libre qui est de préférence plane et qui s'étend, de manière encore préférée, jusqu'à l'encadrement latéral (19.4) opposé à l'arête de coupe (22), dans lequel il est prévu, de manière encore préférée, qu'une surface de guidage (19.3) du corps de base coulé se raccorde à cet encadrement latéral (19.4).

7. Outil selon la revendication 6, **caractérisé en ce que** l'arête de coupe (22) est recouverte au moins par zones au moyen d'un encadrement latéral (17.1, 17.3) du corps de base coulé.

8. Outil selon l'une des revendications 1 à 7, **caractérisé en ce que** deux ou plusieurs éléments de protection contre l'usure (50.1, 50.2), de préférence de construction identique, présentent des faces d'alignement (53) au niveau desquelles ils sont alignés les uns à la suite des autres, de préférence sans espacement ou en laissant un espacement d'alignement inférieur à 12 mm, de préférence inférieur à 8 mm, particulièrement de préférence inférieur à 5 mm, dans lequel les faces d'alignement (53) s'étendent transversalement à l'au moins un encadrement latéral (17.1, 17.2 ; 19.2), et dans lequel l'évidement (18) de l'au moins un encadrement latéral (17.1, 17.2, 17.3 ; 19.2, 19.4) est espacé des faces d'alignement (53) se faisant face des deux éléments de protection contre l'usure (50.1, 50.2).

9. Outil selon l'une des revendications 1 à 8, **caractérisé en ce que** deux ou plusieurs éléments de protection contre l'usure (50.1), de préférence des éléments de protection contre l'usure (50.1) de construction identique, sont alignés les uns à la suite des autres afin de former une rangée, **en ce qu'**un autre élément de protection contre l'usure (50.2) est disposé à l'une ou aux deux extrémités longitudinales de la rangée, lequel présente une forme de construction qui diffère de la forme de construction de l'élément de protection contre l'usure (50.1) qui est adjacent à l'autre élément de protection contre l'usure (50.2), dans lequel il est de préférence prévu que l'autre élément de protection contre l'usure (50.2) présente une arête de coupe latérale (55) qui s'étend transversalement à l'extension longitudinale de la rangée et une arête de coupe (51) qui s'étend dans la direction de l'extension longitudinale de la rangée.

10. Outil selon la revendication 9, **caractérisé en ce que** les deux autres éléments de protection contre l'usure (50.2) aux deux extrémités de la rangée des éléments de protection contre l'usure (50.1) sont réalisés de construction identique.

11. Outil selon l'une des revendications 1 à 10, **caractérisé en ce que** l'au moins un élément de protection contre l'usure (50.2,) présente un dégagement (54) qui se prolonge dans l'évidement (18) de l'encadrement latéral (17.1, 17.2, 17.3 ; 19.2, 19.4).

12. Outil selon l'une des revendications 1 à 11, **caractérisé en ce qu'**il s'agit d'un soc, en particulier d'un soc de cultivateur, d'un soc à ailettes, d'un soc de charrue, d'un outil de concassage, d'un crible ou d'une contre-lame, en particulier pour une moissonneuse-batteuse ou une ensileuse.

13. Outil selon l'une des revendications 1 à 12, **caractérisé en ce que** l'évidement (18) ou au moins une partie des évidements (18) est recouvert ou au moins partiellement rempli au moyen d'un matériau supplémentaire qui diffère du matériau du corps de base coulé.

14. Procédé de fabrication d'un outil (10) selon l'une des revendications 1 à 13, en particulier outil agricole de travail du sol ou outil de travail du sol pour le secteur de la construction, dans lequel un ou plusieurs éléments de protection contre l'usure (20, 50.1, 50.2), constitués de métal dur, en particulier constitués de carbure de tungstène, est/sont inséré(s) dans une partie de moule (40) et/ou une contre-partie de moule (60), dans lequel une forme de coulée comportant une cavité est formée avec la partie de moule (40) et l'au moins une contre-partie de moule (60), en ce qu'un chauffage par induction (70) comprenant au moins une bobine d'induction est disposé autour de la paroi extérieure de la forme de coulée opposée à la cavité, laquelle est disposée de telle manière qu'elle se couple inductivement à l'élément/aux éléments de protection contre l'usure disposé(s) dans la cavité afin de chauffer celui-ci/ceux-ci par induction, et en ce qu'ensuite du fer à l'état fondu ou de l'acier à l'état fondu est introduit dans la cavité par une attaque de coulée (62).

15. Procédé selon la revendication 14, **caractérisé en ce que** l'au moins un élément de protection contre l'usure (20, 50.1, 50.2) est chauffé par induction, au moyen de la ou des bobines d'induction, sur au moins deux côtés disposés de manière décalée l'un par rapport à l'autre.

16. Procédé selon l'une des revendications 14 ou 15, **caractérisé en ce que** l'au moins un élément de protection contre l'usure (20, 50.1, 50.2) est chauffé par induction à au moins 700 °C, de préférence à au moins 900 °C, avant que le fer à l'état fondu ou l'acier à l'état fondu soit introduit dans la cavité.

17. Procédé selon l'une des revendications 14 à 16, **caractérisé en ce que** l'élément de protection contre l'usure (20, 50.1, 50.2) est posé sur une surface de support (41.7) de la partie de moule (40) ou de la contre-partie de moule (60) et est appliqué latéralement contre au moins un élément de moule (41.7) faisant saillie au-delà de la surface de support (41.6), de préférence est positionné sur la surface de support (41.6) entre deux éléments de moule (41.7) appliqués contre des côtés opposés de l'élément de protection contre l'usure.

18. Procédé selon l'une des revendications 14 à 17 pour la fabrication d'un outil selon l'une des revendications 1 à 13.
